(19) **Europäisches Patentamt / European Patent Office / Office européen des brevets**

(11) **EP 2 228 737 A2**

(12) **EUROPEAN PATENT APPLICATION**

(43) Date of publication:
**15.09.2010 Bulletin 2010/37**

(51) Int Cl.:
***G06F 17/30*** *(2006.01)*

(21) Application number: **10155097.8**

(22) Date of filing: **01.03.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR** | (72) Inventor: **Carroll, Edward Michael**<br>**Berkhansted, Hertfordshire HP4 2NP (GB)** |
| (30) Priority: **05.03.2009 GB 0903718**<br>**06.05.2009 GB 0907811** | (74) Representative: **Lawrence, Richard Anthony Keltie**<br>**Fleet Place House**<br>**2 Fleet Place**<br>**London EC4M 7ET (GB)** |
| (71) Applicant: **Carroll, Edward Michael**<br>**Berkhansted, Hertfordshire HP4 2NP (GB)** | |

(54) **Improving search effectiveness**

(57) A method of analysing search results in a data retrieval system is provided. The method comprises receiving a search query for use in a search engine, the search engine execution of the query being in the data retrieval system. The method further comprises receiving one or more search results of the search engine executing the search query, each of the one or more search results comprising attribute information relating to the search results. Furthermore, the method comprises assessing, on the basis of the attribute information, the correlation between the search query and the one or more search results.

## Figure 4a

**Description**

**Introduction**

This invention relates to Search results delivered by a data-retrieval system in response to a Search query. In particular this invention relates to an assessment of the search results in two ways - the closeness of the description of the documents listed in the Search results with the Search query and secondly, that the results are the most appropriate results for the Search query entered.

**Background Art**

Since the earliest days of the Internet, a search facility has been an essential component of any large web site. While navigation features have become more sophisticated, search is the most popular and effective way that users find information on sites. A recent UK National Audit Report highlighted the popularity of search (UK National Audit Office Government on the Internet, 2007):

"In our experiments with internet users, where participants started with the Directgov website, they used the internal search function for 65 per cent of the questions they subsequently answered, evidence of how vital it is for internal search engines to work well."

Some larger government and business sites have hundreds of thousands of searches carried out each day. Even relatively small sites, such as a site for a local authority, can have over 10,000 searches each day. Research indicates that up to 40% of visitors to websites may use search capability (Search and You May Find - Jakob Nielsen's Alertbox for July 15, 1997).

A recent White Paper from Google summarised the challenge:

"Your online visitors count on search to find what they want - 90 percent of companies report that search is the No. 1 means of navigation on their site and 82 percent of visitors use site search to find the information they need.85 percent of site searches don't return what the user sought, and 22 percent return no results at all."

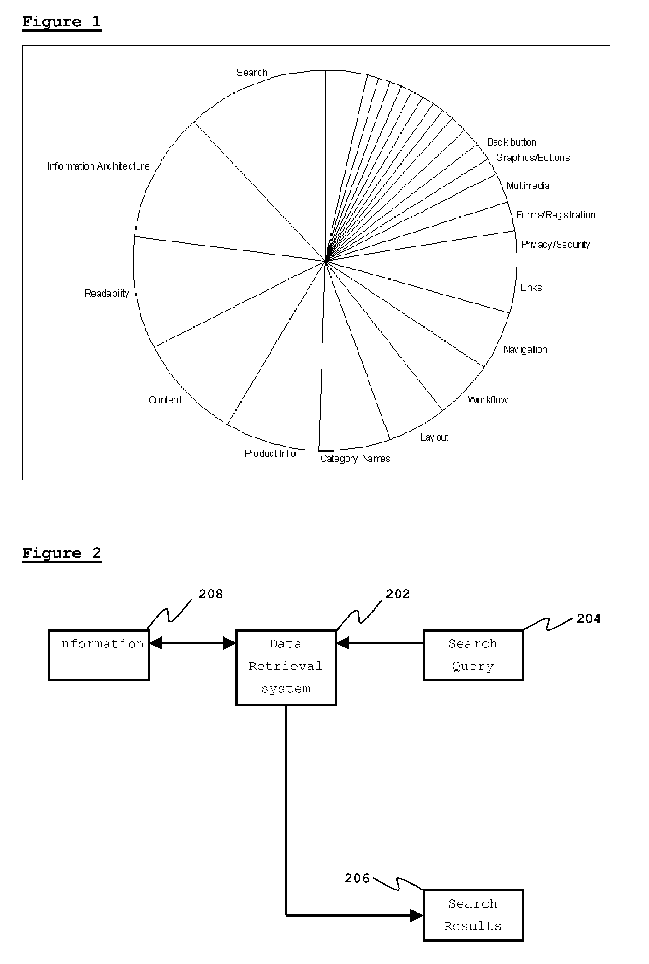

Fig. 1 identifies some of the usability issues associated with public facing web sites, and which identifies Search as the feature of a site that causes the greatest usability problems according to Nielsen and Loranger (Prioritizing Web Usability - Jakob Nielsen & Hoa Loranger, 2006).

How does a search engine work? A search engine will use the words within a page to identify how relevant that page is to the search term or terms being entered. These words will be in the heading, title or body of the page, but also within "metadata" - additional information describing the page that is coded into the page, but is not seen by users. Most search engines will attach a heavier weighting to words that appear in titles or metadata, as opposed to the body of the page. The search engine concept is shown schematically in Fig. 2 in which a data-retrieval system **202** receives a Search query **204** and provides Search results **206.** A typical data-retrieval system includes Information **208** held in a database, which is any collection of information and contains several items. Each of the items in the collection may be compared to the Search query to determine whether the item matches the Search query. The collection of information may be the Internet, a similar network having a collection of documents, or a private structured database or any other searchable entity. The search engine typically includes an (inverted) index representing each item in the collection of information in order to simplify and accelerate the search process. In some cases, such as with a search engine for the World Wide Web, or the Internet, the index is accessed by the data-retrieval system and the actual documents to be accessed using the results of a Search query are from a third party source.

Generally speaking, a typical data-retrieval system invites the user to provide a Search query, which is used to interrogate the system to yield Search results. These are often ranked according to various criteria characteristic of the system being interrogated. The search results typically include enough information to access the actual item, but generally do not include all the information in the documents identified during the Search, but typically a title and some kind of summary or digest of the content of the document (referred to as a "snippet"). (The summary may contain a short précis of the document - either in clear English or generated automatically by the search engine, together with additional attributes such as date, address of the document ( a file name or Uniform Resource Locations - URL), subject area etc.)

There are generally two methods used for searching for items within a collection of information, such as a database containing multiple information sources (e.g. text documents). The first method commonly is called a Boolean search which performs logical operations over items in the collection according to rules of logic. Such searching uses conventional logic operations, such as "and", "or" or "not," and perhaps some additional operators which imply ordering or word proximity or the like or have normative force. Another method is based on a statistical analysis to determine the apparent importance of the searched terms within individual items. The search terms accrue "importance" value based on a number of factors, such as their position in an item and the context in which they appear. For example, a search term appearing in the title of a document may be given more weight than if the search term appears in a footnote of the same document. There are several forms, variations and combinations of statistical and Boolean searching methods.

A search engine ranks results based on the content of pages and metadata provided for indexing - so the quality of results is dependent on the accuracy of the descriptive content. If the descriptive content is poor, for instance, if the title does not adequately cover the subject area, then the page will not appear on the first results page.

With the growth in popularity of Internet search engines, users expect a site search to work as fast, and find the best pages, the way that Google, MSN, Ask or Yahoo appear to do. Users make a very quick decision once they see the results of a search. If they do not perceive a close match within the result text (which will typically consist of the title and a brief summary of the page) they will usually search again. Users have very limited patience and research shows that:

- users generally only look at the first page of results and indeed only the first few results (Search: Visible and Simple - Jakob Nielsen's Alertbox, May 13, 2001)

- over 70% of users will click on either of the first two results in a listing

- users do not use advanced search features or enter searches using complex syntax - users enter either a single word or a phrase consisting of two or more words separated by spaces

If the search capability is not returning appropriate results to the user, then the costs incurred can be significant:

- If a web site user cannot find what he or she wants, they may contact the organisation through other, more expensive channels (e.g. phone, email, post).

- If a web site user wastes time trying to find information, goodwill is soon lost:

    - for commercial web sites, the user may go to a competitor with more effective search facilities

    - for public sector web sites, the impression may be gained that the organisation is not being run effectively or efficiently.

Poor search results waste time for the user. Users may be confused by incomplete titles or summaries and, as a result, will click on irrelevant material and waste time. In some of the worst examples we have identified in our research, a badly described result points to a large and irrelevant document (such as a 2MB PDF file) that takes minutes to download and may result in the user's browser "hanging", delivering a disappointing user experience. However, the most significant impact of poor search is when the best content, developed specifically to answer the query that is behind the search being attempted, is not delivered on the results page - the investment in creating and publishing this content is wasted. Little information is available on the total average cost of creating web content - one commentator has estimated that a single web page on a corporate site may cost $10,000 (http://christacy.blogspot.com/2006/03/10000-is-magic-number.html), while our benchmarking has identified costs between £2,500 and £10,000 per page, once content development, staff time for consultation and systems costs are taken into account. Given this considerable investment in content generation, it is important to ensure that content is easily found by potential users.

Potential cost savings from improved search for the largest sites can run into millions of pounds per annum - both to users (either citizens, customers or other businesses) or to the organisation itself through reduced channel costs (IDC has found that companies save $30 every time a user answers a support question online). Therefore, improving search is an opportunity to save operating costs while maximising the effectiveness of an organisation's web site content.

The technology to deliver search has become increasingly 'commoditised' - with lower initial and ongoing costs and sophisticated "out of the box" capabilities. Hosted search engines and "plug and go" search appliances can be implemented in a few days and at minimal cost. This commoditisation of search means that it is relatively quick to implement or upgrade search capability, and as a result even the smallest sites can have sophisticated search capability. While there are clearly differences in the capabilities of various search engines, the gap between low cost out of the box solutions and sophisticated packages is narrowing - but search results are not necessarily improving in line with new technology.

Irrespective of the claims made by search engine vendors, the key issue and the real challenge for organisations is that search accuracy is dependent on the content that search is applied to. Writing, approving and publishing content is a time consuming process, and most organisation incur relatively high costs (either for external contract staff or internal staff costs) writing and updating content on a website. A web site project will include work to agree a position of a page on a web site within an overall "information architecture" and to agree how the page will be accessed via navigation menus, but relatively little (or no) effort is usually spent on ensuring that the content will appear appropriately in the list of results when using a search engine. Once served up by a search engine, how does the content owner know a page is being correctly ranked against other content - particularly when the page is mixed in with a wide range of related and sometimes very similar content from other contributors?

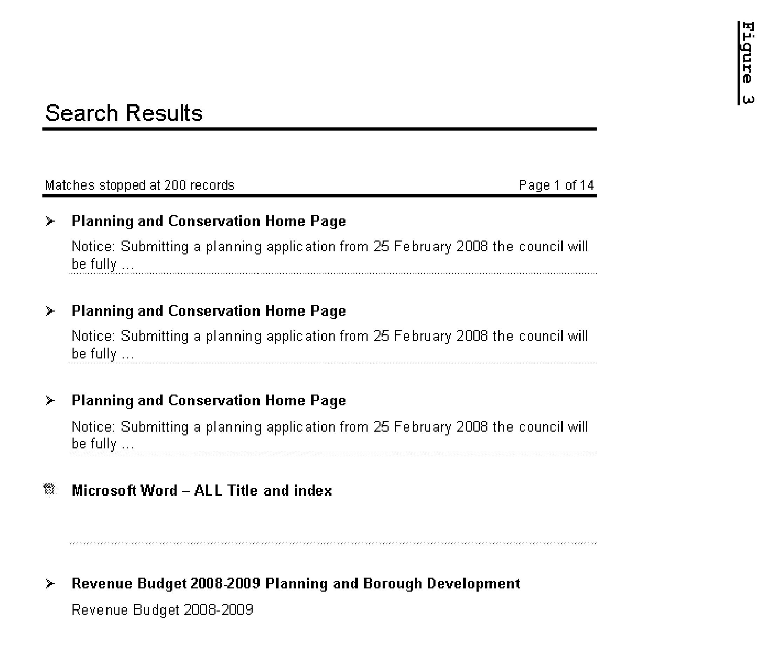

Fig. 3 shows a real example of the problem. In common with nearly all search facilities, this show a title and summary for the first few results found. The first three results have identical titles and summaries. The fourth result has a meaningless title and no summary. Which should the user select?

Unlike navigation using links (e.g. menus or links that direct a user to an area of a site), search does not produce as predictable results and minor changes to the search terms entered can bring up a completely different set of results. When a user clicks on a navigation link, the user should always go to the same page (assuming the site is working correctly!). With search, what the user sees will depend on the order in which words are entered, whether singular or plural forms of words are used, whether prepositions such as "a" and "the" are used, but most of all, it will depend on what content is available on the site at the point in time when the search is carried out - and this is changing over time as new content is added and old content removed from the site or modified.

Providing Search results that are of relevance to the user is thus a major problem.

In U.S. Patent No. 6,012,053, allowing the user to specify relevance factors to a relevance determination module enhances the relevance of the Search results to the user. This module also receives the Search results, so that it can get further information about the documents identified in order to apply the relevance factors. From these three inputs, the relevance determination module gives a score for the relevance for each result in the list/set of Search results. Disadvantageously, this system requires two interrogations of the data-retrieval system: the first to generate Search results in response to a Search query, and the second to obtain further information about the documents identified in order to apply the relevance factors. This reduces the speed with which results are provided.

A similar approach is disclosed in U.S. Patent Appl. Pub. No. 2006/0136411 in which each of the results of a Search query is parsed to obtain data, such as text, formatting information, metadata, and the like. The text, the formatting information and the metadata are passed through a feature extraction application to extract data that may be used to improve a ranking of the search results based on relevance of the search results to the search engine query. The feature extraction application extracts features, such as titles, found in any of the text based on formatting information applied to or associated with the text. The extracted titles, the text, the formatting information and the metadata for any given search results item are processed according to a field weighting application for determining a ranking of the given search results item. Ranked search results items may then be displayed according to ranking. Again, the approach involves having a second look at documents found in the Search results.

There are relatively few quantifiable measures for the effectiveness of search, particularly for large non-static collections of documents. Information scientists use the terms "precision" and "recall" to describe search effectiveness. Precision is the concept of finding the best pages first. Recall is about ensuring that all relevant material is found.

Precision is a potentially valuable method of measuring how successfully search is working. Precision, in the context of search results, means that the first few results represent the best pages on the web site for a given search. One measure that is used by information scientists is "Precision @ x" - where x is a number indicating how many results are to be examined. Precision @ 10 is an assessment of whether the first ten results from a search contain the most relevant material, compared to all the possible relevant pages that could have been returned.

Recall is less useful a measure than precision, because it is rarely possible to deliver all relevant material from a large web site or document collection and, as explained in the section above, has only limited value because a search user is only likely to view the first four or five results.

The methods used to calculate precision and recall require a detailed and time consuming analysis of each item of content and as a result can only be applied to static, research collections, as opposed to the world wide web or a complex, changing web site.

What tools can be used to help content owners to understand how well their content is performing through search? There are few tools to assist in this process, which provides additional challenges for search effectiveness.

Search analytics is an established subject area, although with relatively little information to base decisions on. Search is normally analysed in two ways:

1. Firstly - analysing the most popular terms that are being entered into the search box. This information can then be used to reproduce the searches and manually examine the results. Additionally, a list of those searches that deliver no documents is also usually available as part of this analysis.

2. Secondly, examining which pages are being returned most often i.e. the most popular pages. Some of these will be viewed as a result of searches, but mostly as a result of navigation links that direct users to the pages. It is impracticable or even impossible to identify which pages have been returned as a result of searching versus clicking on URL links.

In addition, a few sites with sophisticated tracking are able to identify which page the user selects after a search, although this information is time consuming to analyse.

A conclusion from above is that it is possible to influence the ranking of content within a search engine and therefore improve the positioning of a page within a search engine results page. If the content owners improve the title or add relevant metadata then a page will appear nearer the top of the results page once the changes have been applied, and once the search engine has reindexed the page.

However, very few organisations have processes in place to assess how well content is being delivered through search. The process of producing content rarely includes any clearly defined processes oe guidance to ensure that the content contains the information to ensure it is found using the appropriate search words.

More specifically, few organisations have processes to assess if the best content is close enough to the top of the search results page for common searches. One of the challenges is that until a page has been loaded onto the live site and indexed by the search engine - a process that might take a few days to happen - it may not be possible to assess how successful the content and metadata has been for search ranking. It is only when a piece of content is ranked with other content on the site that the impact of the metadata or content changes can be understood, and as identified earlier, this can change as other content is added or removed on the site. It also follows that search cannot be subjected to a "once only" test, as can the testing of navigation links - it is necessary to regularly assess the effectiveness of search over time, and as content is added or removed from the site.

U.S. Patent No. 7,386,543 discloses how one or more documents in Search results obtained in response to the Search query are assessed for whether they relate to a list of favoured or non-favoured sources, and are ranked accordingly. The favoured and non-favoured lists are developed by editorial input, and generally relate to the quality of websites found on the Internet as a whole, rather than in one site. However this approach does not assess the performance of a data-retrieval system to particular queries against a favoured list consisting of the resource's best hits.

Organisations generally lack clear roles and responsibilities for evaluating content delivered using search. Once a page is published, the content owner's activity is seen to be complete (until updates to the page are required). The role responsible for the site (typically the "web site manager") may include responsibilities to ensure the right information is found through search. However, the web site manager is not usually in a position to understand how well search is working because he or she will not have a detailed understanding of the range of content and how users will access it.

With appropriate training and guidance for content owners and editors, it is possible to ensure that the most relevant content appears high enough on the results page for a given search. In general, content editors are not given sufficient guidance on the importance of good titles, metadata or content. But the challenge goes beyond the initial creation and publishing of content. The position of a page within a set of results may vary as new content is added or removed from the site, so it becomes necessary to continually monitor a site's popular searches over time - the most relevant pages should still appear high in the results page, even though newer less relevant content is added. Clearly it is not practical for content owners to monitor content on a daily basis using a manual process.

Currently available analytical approaches do not answer the question of the usefulness of results for common searches. That is:

- How well does the content match the terms being searched for?

- Does the title and summary shown on the result page adequately represent the pages?

- Is the search engine delivering the best information (as judged by the authors / content owners of the content) within the first few results? (If not, this means that the searcher does not necessarily find the most appropriate information.)

Furthermore there are few approaches or tools available to analyse search, diagnose problems and provide information that will enable a better search experience to be delivered to users. In other words, approaches to help with the process of improving search.

## Summary of Invention

From the foregoing, it may be appreciated that a need has arisen for improving the quality of search results obtained from a data-retrieval system in response to a search query. The present invention is an analyser for use with a data-retrieval system providing search results in response to one or more search queries, which takes a first input a parameter for comparison and as a second input the search results. The parameter for comparison is either the one or more search queries or a list of best resources available to the data-retrieval system in response to the one or more search queries. The analyzer analyses a feature of the parameter for comparison against the search results to provide a score.

Where the parameter for comparison is one or more search queries, comparison is between features of each result in the list of Search results delivered in response to a Search query submitted to a data-retrieval system to assess the match between the description of the result and the Search query, and each result (up to a specified maximum number) is given a score corresponding to the closeness of match or the correlation between the result and the search query. The closeness of match is determined according to various criteria of the Search results. For example, the closeness of match is determined according to all the data in each result, by the Title of each result, by a Summary of each result, or by a combination of criteria in a weighted or un-weighted fashion. In one embodiment, the Search results are re-ordered according to the Score.

Where the parameter for comparison is a list of the resources available to the data-retrieval system, then the score is representative of the position each of the resources has in the search results and indicates how close to the top of the search results each resource is to be found. Preferably, the resources in the list are the best resources available to the system. In one embodiment, the list of resources is re-ordered according to the Score and a new page generated, containing the re-ordered search results.

From the foregoing, it may be appreciated that a need has also arisen for improving the assessment and improvement of search results provided by a data-retrieval system in response to popular search queries. In one embodiment, the analyser of the present invention can be used on a list of popular search queries, comparing each result within a set of search results (up to a specified maximum number) with the search query and providing a report of the closeness of match between each result and the corresponding search query. In one embodiment, the report may show the performance graphically, or in another embodiment, provide a list of the resources gaining the highest (or lowest) scores in response to a particular query. In another embodiment, the report may combine the list of resources from a number of similar searches and identify any resources that have been found by two or more similar searches. In a further embodiment the analyser can be used to assess how well a data-retrieval system delivers the best and most appropriate content that is available to it in response to particular queries. The present invention is an analyser for measuring, for a particular search query submitted to a data-retrieval system, the position of one or more most relevant resources available to the data-retrieval system in Search results delivered in response to the Search query, and each resource is given a score corresponding to the position.

The present invention thus introduces new measures that can be used to analyse search, diagnose problems and provide information that will enable a better search experience to be delivered to users. The invention also describes an innovative tool that can develop these measures for almost any site with search capability. It is particularly relevant for organisations with:

- extensive informational web sites (such as government departments, agencies, local authorities)

- aggregating web sites (bringing together content from multiple sites - e.g. government portals)

- complex intranet sites, or multiple intranet where search is being used to provide a single view of all information

- extensive Document Management / Records Management collections.

According to one aspect of the present invention there is provided a method of analysing search results in a data retrieval system comprising receiving a search query for use in a search engine, the search engine execution of the query being in the data retrieval system, receiving one or more search results of the search engine executing the search query, each of the one or more search results comprising attribute information relating to the search result, and assessing, on the basis of the attribute information, the correlation between the search query and the one or more search results.

Preferably, the attribute information comprises a title element for each of the one or more search results, and the assessing step comprises calculating the correlation between the search query and the title element.

Optionally, the attribute information for each of the one or more search results comprises an abstract of the substantive content of each of the results, and the assessing step comprises calculating the correlation between the search query and the abstract.

Optionally, the attribute information comprises metadata for each of the one or more search results, and the assessing step comprises calculating the correlation between the search query and the abstract.

In a preferred embodiment, the assessing step comprises calculating a "Result Utility" (i.e. closeness of match) score for each of the one or more search results, on the basis of one or more correlation calculations between the search query and the attribute information.

Preferably, the method further comprises a sorter arranged to order the search results according to the "Result Utility" score.

According to an other aspect of the present invention there is provided a method of analysing search results in a data retrieval system comprising: receiving one or more resource indicators each corresponding to one or more resources available through the data-retrieval system; further receiving an ordered list of search result items, from a search engine executing a search query, wherein the search result items are associated with a particular resource indicator; and determining the positioning of the received resource indicators within the ordered list of search result items; wherein the positioning of the received resource indicators provides a measure of the effectiveness of retrieval of the received resource indicators from the data retrieval system by use of the search query.

Preferably, the received one or more resource indicators corresponds to a user selection of resource indicators of interest.

In a preferred embodiment the data-retrieval system is an Internet Search engine.

Preferably, the data-retrieval system is selected from the group comprising:

a single website, a portal, a complex intranet site, and a plurality of websites.

Typically, a high result utility score identifies potential best resources for the search query.

Optionally, one or more search queries are provided from a query list. The query list may contain popular search queries made to the data-retrieval system.

In a preferred embodiment, the method may further comprise receiving the one or more search queries, further receiving a list of search results for each of the one or more search queries, calculating a result utility score corresponding to the correlation between each result within the list of search results and corresponding search query, and reporting an assessment of the correlation between the list of search results and the corresponding search query.

According to another aspect of the present invention there is provided an analyser for analysing search results in a data retrieval system comprising a search query receiver for receiving a search query for use in a search engine, the search engine execution of the query being in the data retrieval system, a search results receiver for receiving one or more search results of the search engine executing the search query, each of the one or more search results comprising attribute information relating to the search result, wherein the analyser being arranged to assess, on the basis of the attribute information, the correlation between the search query and the one or more search results.

According to yet another aspect of the present invention there is provided an analyser for analysing search results in a data retrieval system comprising a resource indicator receiver for receiving one or more resource indicators each corresponding to one or more resources available through the data-retrieval system, a search result receiver for receiving an ordered list of search result items, from a search engine executing a search query, wherein the search result items are associated with a particular resource indicator, and wherein the analyser is arranged to determine the positioning of the received resource indicators within the ordered list of search result items, wherein the positioning of the received resource indicators provides a measure of the effectiveness of retrieval of the received resource indicators from the data retrieval system by use of the search query.

## Brief Description of Drawings

For a more complete explanation of the present invention and the technical advantages thereof, reference is now made to the following description and the accompanying drawing in which:

Figure 1 summarises typical usability problems for a website. Search is the most significant cause of problems;

Figure 2 is a schematic of data-retrieval system;

Figure 3 is the result of search showing poor result utility;

Figure 4a is a schematic of the analyser of the present invention;

Figure 4b is a schematic of the analyser of the present invention that improves the relevancy of search results;

Figure 5a is a schematic of the analyser of the present invention for analysing a list of search queries for relevancy;

Figure 5b is a schematic of the analyser of the present invention for analysing a list of search queries for relevancy and providing a graphical output;

Figure 6 is an example of graphical output illustrating relevancy of a list of search queries; and

Figure 7 is a flow chart of Result Utility Analysis.

Figure 8a is a schematic of the analyser of the present invention for analysing how close a resource is to the top of a Search results list;

Figure 8b is a schematic of the analyser of the present invention for analysing how close a list of resource is to the top of a Search results list;

Figure 9 is a flow chart of Result Position Analysis; and

Figure 10 is a schematic of the present invention showing an analyser able to provide Result Utility Analysis and Results Position Analysis.

## Detailed Description of Preferred Embodiments

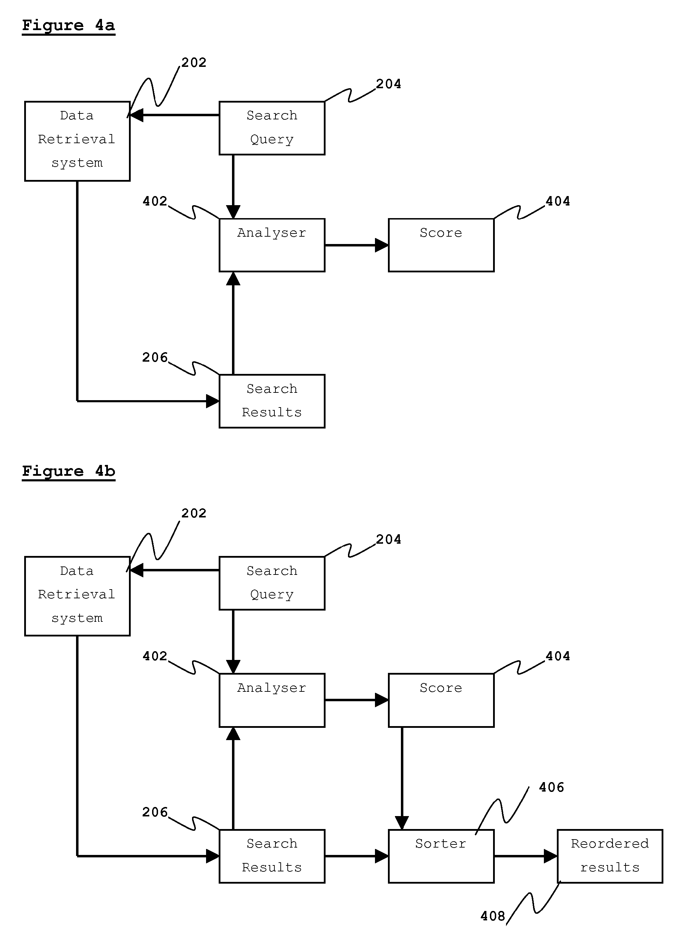

Embodiments of the present invention and their technical advantages may be better understood by referring to Figs. 4 to 10, which show schematic representations of the present invention.

One embodiment of the invention relates to assessing the quality or perceived usefulness of a set of search results output from a search engine. A measure or assessment of the perceived usefulness of a set of search results is similar to the visual assessment that a user viewing the search results list would make. As such, the assessment may be based on the information which is provided to the user. Typically, search results are provided in a list, with the result the search engine perceives as the most relevant being at the top of the list. The search results list usually includes a title and a summary. As described above, the search result(s) that a search engine deems to be of most relevance may differ from those which a user, or content contributor, of the data retrieval system may deem to be of most relevance. By assessing the correlation between the search query and the search result list it is possible to determine a measure for the perceived usefulness of the search results, and it is also possible to re-order search results in terms of the perceived usefulness. It is also possible to assess the most common search queries to assess the perceived quality of the search results returned in response to those queries.

Fig. 4a shows a schematic diagram of a search engine concept, similar to that of Figure 2, but also including an Analyser **402,** and a Score **404.** The Analyser **402** compares results in a list of Search results **206** with a Search query **204** and determines a Score **404** representative of the closeness of match or correlation between each result in the Search results set **206** and the Search query **204.** A feature of the present invention is that the assessment of match may be made only on the input data to the Search (the Search query) and the output data from the Search (the Search results).

The closeness of match is determined according to various criteria of the Search results. For example, the closeness of match is determined according to all the data in each result, by the Title of each result, by a Summary of each result, or by a combination of criteria in a weighted or un-weighted fashion.

The Score obtained from the Analyser is used in a variety of ways to provide better Search results to the user. For example, and referring to Fig. 4b, a Sorter **406** processes the Search results according to the Score to yield a reordered results list **408.** The Score 404 obtained by the Analyser is also used to suggest the closest results for a Search, which can be used by content owners to help identify the best resource for a given search, which ultimately requires confirmation by a subject expert.

The Search result set may be analysed further by extracting metadata from items shown on the results list by:

1. Identifying the URL of each result

2. Retrieving the documents

3. Using a parameter list (to identify the relevant metadata tags)and

4. Parsing the content to extract metadata from each of the results.

The metadata may enable further analysis on the perceived relevance of the search results. The further analysis may include:

- An average / Min / Max date of content, based on one of the date metadata fields for each result e.g. Date Last Modified or Publication date

- A sorted list of the most common keyword/subject metadata values

- A sorted list of the most common originators of content e.g. department, organisation, content author etc.

- A type of resource identified e.g. HTML, PDF, Word, Excel

The Search query is typically provided by a user wishing to find information from a data retrieval system (not shown). The data source may be a single source, such as a commercial database or private in-house information resource, or it may be a single website, for example a newspaper website, a government website or a retailer's website, or it may be a collection of websites including the Internet as a whole.

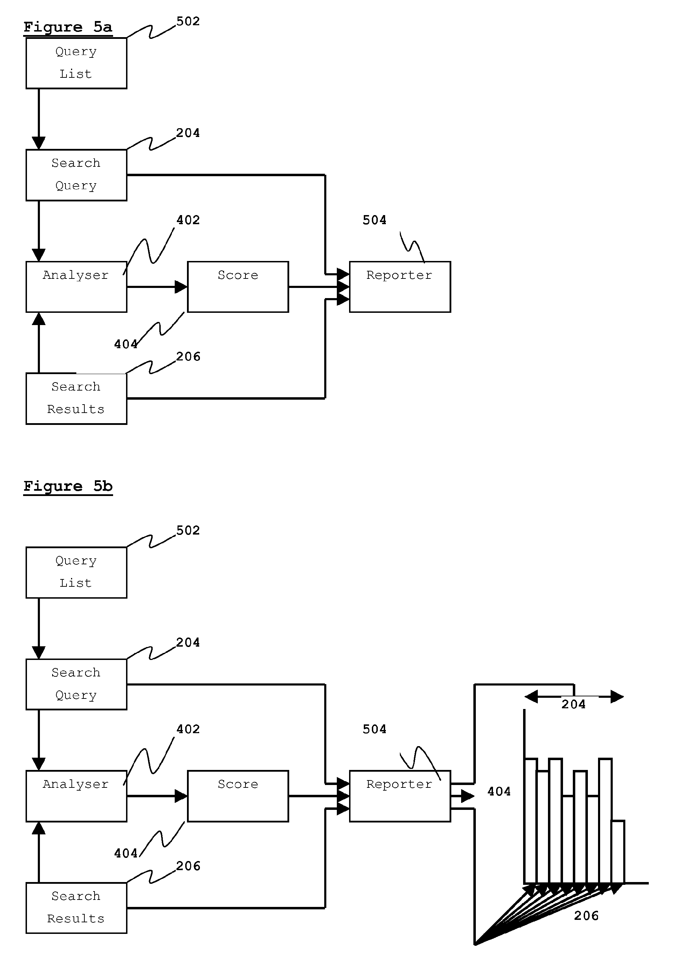

Referring now to Fig. 5a, which shows one embodiment of the invention, in which the data source is a source under the management of a content owner and the Search query is provided from a Query List **502** (data-retrieval system not shown). A Reporter **504** analyses how effectively the data-retrieval system is providing relevant information. For example, the Query List 502 comprises the most popular search queries that users have employed to find information, which can be identified from the data-retrieval system's logs. The Analyser **402** compares results in each set of Search results **206** with the corresponding Search queries **204** and determines a score **404** representative of the closeness of match or correlation between each result and the Search queries used to obtain those search results.

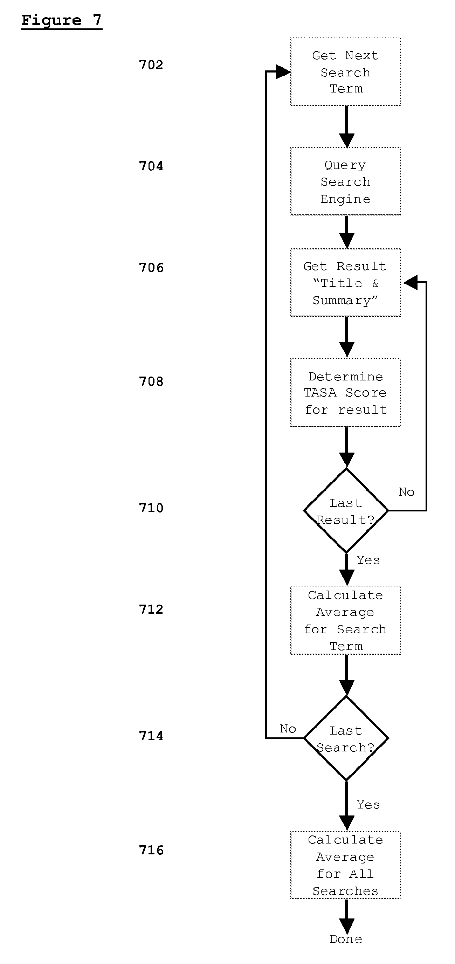

Fig. 7 is a flow chart showing an overview of the method steps, for assessing search results, of one embodiment of the invention. As shown, a search term (search query) is retrieved, at step **702,** from the Query List **502** (not shown). This search term is used, at step **704,** to query the Search engine, and Title and Summary information is extracted, at step **706,** from the first result in the Search results. A RUA (Result Utility Analysis) Score is determined, at step **708,** from the Title and Summary information of the first result in the Search results. A determination is made, at step **710,** as to whether or not the end of the Search results (up to a specified maximum number) has been reached. If it has, then an average Score for the Search term is calculated, at step **712;** if not, then steps **706** and **708** are repeated. A determination is made, at step **714,** as to whether or not the end of the Query List has been reached. If it has, then an average Score for all the Search terms is calculated at step **714;** if not, then steps **702** and **712** are repeated[Ted Carrol].

Search queries 204, Search results 206 and Scores 404 are processed by the Reporter **504** to yield information about the effectiveness of the data-retrieval system (search engine) in providing relevant information in response to popular search queries.

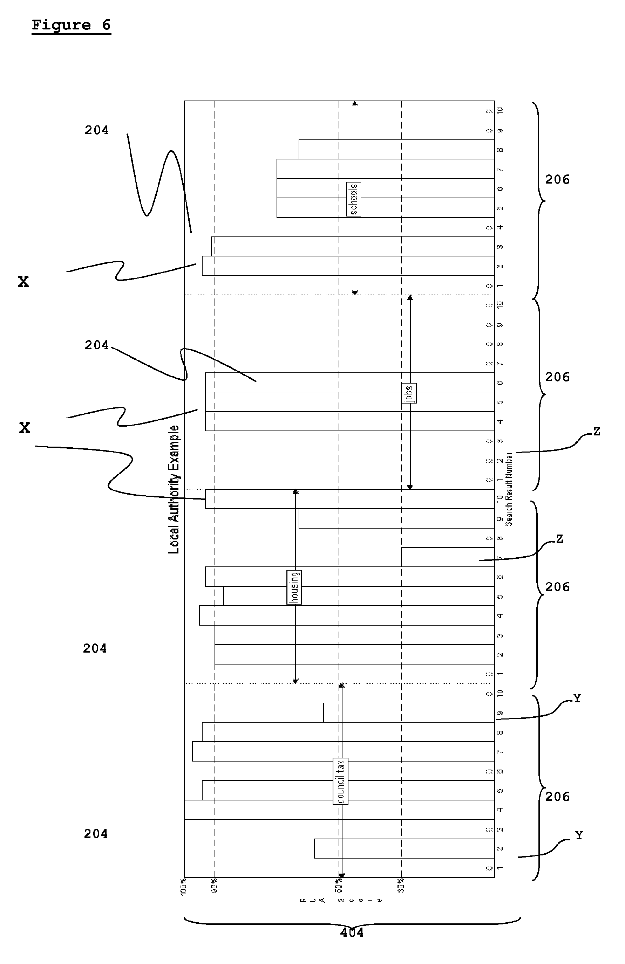

Information from the Reporter 504 can be presented in a number of different ways. For example, it may be shown graphically, as shown in Figs. 5b and 6. Here the closeness of match Score **404** is plotted against each result **206** for a particular Search query **204** (data-retrieval system not shown). An example of this graphical representation output, for a set of searches performed on a local authority website, is shown in Fig. 6. In this case, the Query List **502** includes the frequently used search queries: "council tax", "housing", "jobs" and "schools". A closeness of match Score **404** is calculated for the first ten Search results **206** for each of the Search queries **204.** In this particular example, the first three and last four results for " Jobs" score zero, while results 4,5, and 6 score highly.

Fig. 6. gives a simple visual appreciation of which of the results returned, by the data-retrieval system in response to the query, have the closest match. In another example, the information can be presented in a list, in which, for each Search query 204, URLs or other identifiers for each of the Search results 206 is provided in order of Score 404. From the list, it is then clear whether or not the most appropriate information resources are being provided for particular queries.

A person skilled in the art will appreciate that many other arrangements for providing results are possible; preferably the output provides Search results associated with a score for a given Search query.

This new approach to measuring the effectiveness of search is superior to the Precision @ x analysis disclosed above, which is of limited use for a complex web site with a significant volume of content.

One embodiment of the present invention provides a new type of analysis called Result Utility Analysis (RUA). Result Utility Analysis measures how closely the results of a search as represented in the search results page match or correlate to the search words being entered. RUA uses the title and summary shown in a set of results and compares the text being displayed, in the search results, with the search words (terms/queries)entered to produce the search results. This is one measure of how well the titles and summaries of pages in the search results reflect the content of the pages.

This analysis differs from conventional "Precision @ x " analysis, as it does not require a manual assessment of every page on the site before the analysis takes place - it assesses the text provided for the first few search results returned by the search engine. This is an extremely helpful analysis because it emulates the process undertaken by a user scanning a set of results. Usability studies show that the user makes a split second decision to select or not select a particular result (based on the text shown) and, if the complete set of results shown is not appropriate, the user will redo the search with more or different terms, based on the evidence on the screen.

A RUA score @ x is measured from 0% to 100%. A RUA score @10 of 100% means that the titles and summaries of the first 10 results for a search are closely aligned to the search term and therefore likely to be very relevant. For example, in the worst cases, a result title would simply show the name of the file e.g. "Document01.pdf" and the summary would be blank - the RUA score would be 0%. In the best cases, the title and summary both include the search terms and would therefore have a much higher score. The RUA score can utilise a number of algorithms in addition to the basic match with the search terms - for example penalising results (i.e. reducing the score associated with results) where the summary contains multiple occurrences of the search words, or improving the score where the search term is at the beginning of the title or summary.

In order to generate a RUA score, the Analyser 402 has to identify the appropriate content to be assessed for each result. This is required for each result up to the maximum number of results being analysed.

The appropriate content, referred to as attribute information, for generating the RUA score may include any combination of: title, summary information, and metadata.

One example of how a RUA score may be generated is set out below. However, a person skilled in the art will appreciate that there may be many different ways in which a score may be generated.

The Analyser 402 identifies and captures the text content of each result title. As shown in the example in Figure 3, the first three results have titles with the text "planning and conservation home page".

In HTML-based web based pages, each Title in the result list is usually the Anchor or link to the webpage to which the result points, i.e. by clicking on the Title, the user is taken to the source webpage. These Title Anchors may have a corresponding 'ALT tag', which is used by search engines in the indexing process and browsers (to meet accessibility guidelines) to show a pop-up text which gives additional information about the webpage in question. For these HTML-based web based pages, the Analyser 402 also identifies and captures the text associated with the ALT tag for the Title Anchor for each result in the list.

In the list of search results, a textual summary is usually provided below the title. The Analyser 402 also identifies and captures the text content of these summaries. The summaries are usually two to three lines of text, but could also include additional information such as a URL, subject area, date, file size for the target webpage.

In one embodiment, a separate content score is calculated for each of these components (title, ALT title and Summary) and a weighting may be applied to the content score to result in a weighted score for each component.

The RUA score is dependent on the weighting applied across the title and summary scores. For example a typical weighting would be 70% for the title score and 30% for the summary score as follows:

$$RUAscore = \frac{overall\_title\_score \times title\_weighting + (summary\_score \times (100 - title\_weighting))}{100}$$

The content scores (for the title and summary) are calculated based on identifying the search term or terms within the text content identified in the title and in the summary. If the search term does not appear in either the title or the summary, then the content scores, title content_score and summary content_score are both 0%. If the search terms appear in both the title and summary, then the scores will be somewhere between 0% and 100%, depending on a number of factors as described below. The scoring is more complex if there are multiple words within the search term, for example "planning permission".

**factor1 = title content score**

**factor2 = length of search terms / length of the title string**

**factor3 = ALT title content score**

**factor4 = summary content score**

**lweighting = length weighting - maximim weighting attribyed to factor 2**

The title, ALT title and summary content scores (factor1, factor3 and factor4) are calculated based on the appearance of the search term in the text content of the title, ALT title and summary.

$$\text{overall title score} = \left[\frac{\text{factor1} \times (100 - lweighting) + \left[\dfrac{\text{factor1} \times lweighting \times \text{factor2}}{100}\right]}{100}\right]$$

The overall title score, used in calculating the RUA score, is weighted based on the length of the search term and the total length of the title. In other words, if the title is too long, it will be less easy to spot the search term. This weighting is effected through factor2, as shown in the above equation and the impact is determined by lweighting.
If the title content score is low (i.e. less than *lowthreshold*) but the Alt Title content score is high (i.e. greater than *altthreshhold*), then we can increase the total score, as follows:

IF factor1 < **lowthreshold** AND factor3 > **altthreshold**

$$\text{THEN} \quad \text{factor1} = \frac{\text{factor1} \times \text{factor3}}{\text{altthreshold}}$$

In many cases the search engine generates a summary that is little more than multiple repeats of the search terms, separated by punctuation or preposition words, and this is of minimal use to the user for understanding the context of the results. The RUA score takes this into account by reducing the summary score when the search terms appear more than once, using the rw (repeat weighting factor).

$$\text{summary\_sc ore} = \frac{\text{factor4} \times (100 - rw) + rw \times factor\,4 \times (\text{maxc} - \text{hit\_count} + 1)/\text{maxc}}{100}$$

where hit_count is the number of times that the search term appears in the summary text and maxc is the maximum number of repeat terms that will be taken account of. For example, if rw (repeat weighting factor) is 100%, and if the search term appears 6 times in the summary text, then the score is reduced to 50% of its original value. Other values for repeat weighting may be used to increase or reduce the reduction in score based on this effect.
This approach can also use stemming (using an appropriate language stemming algorithm) or similar morphological approach, to reduce a word to its stem or root form, to allow for identification and appropriate scoring of word variations within search queries or search results.

IF        the full search term (stemmed or unstemmed) exists

THEN    content_score = 100%

IF        all the words in a multi-word search term (stemmed or unstemmed) appear

THEN    content_score = 100%

IF        only some words in a multi-word search term appear

$$\text{THEN} \qquad \text{content\_score} = \text{phrase\_weighting} \times \frac{\text{number of words in search term found}}{\text{total number of words in the search term}}$$

where the phrase_weighting is set to a value that will reduce the content score if all words are not present. A typical value for the phrase_weighting is 80%. Therefore, if only one term from a two term phrase is found, the score will be 40%.

This calculation is carried out both for stemmed values and non-stemmed values and the highest score achieved is used.

Figure 6 shows an automated assessment of a RUA score for the most popular searches ("council tax", "housing", "jobs" and "schools") for a real local authority web site in the UK. The first 10 results are shown for each search, with a RUA score for each result. The results labelled with Reference X show a score of 90% or above, the results labelled with Reference Y show scores between 30% and 90% and the results labelled with Reference Z have a score of under 30%. Results marked "0" denote a score of zero for these results.

By using this technique for a data retrieval system's most common searches (which can easily be obtained from a search engine log) it is possible to quickly highlight areas of content that have low Result Utility Analysis scores. Most public web sites have a small peak of common searches - followed by a very long tail of less common searches. This offers the opportunity to focus on the most common searches and ensure that these are delivering the best results.

The automated process compares the words used for the search with the words in the title, alternative title and summary, usually giving a higher weighting to the words in the title. A limitation of this analysis is that the best page for a given search term may (quite logically) not include the search term in the title or summary of the page. However, it should be recognised that a user will be less likely to click on a result that does not reflect the search terms being entered and so content owners should understand the importance of ensuring consistency between the main HTML content on a page and the content shown on a search result listing. Modifying the title or content to reflect this will deliver an improved user experience for the most popular searches.

RUA measures a combination of content quality and search engine capability. RUA does not specifically measure that the most appropriate pages have been found - it measures the closeness of match (and therefore the perceived usefulness) of the titles and summaries provided by the content owners and, as a result, can point out the inadequacies of content and identify priority areas for improvement.

A major advantage of using Result Utility Analysis is that it can be determined very quickly against the results of any Data Retrieval System. Because it requires no pre-investigation of content, it can also be used to quickly compare results on different sites or content on the same site using a variety of search engines, and as a result, can be used to highlight differences in content quality or search engine functionality - in a way that has not been possible up to now. It can also be used to compare results from similar searches to identify commonly returned results.

The analysis provides a quantifiable measure/assessment of content quality and as such offers a significant advance in the subject area of search analytics and in the more widely applicable area of assessing the quality of information being created and managed in organisations. Quantifiable results can in turn be translated into evidence-based (and therefore credible) benefits (such as end user or employee time savings) to justify investment in Data Retrieval Systems as well as initiatives to improve the content in information collections. Further analysis is possible using a similar technique - for instance, determining the average date of content found through search (based on one of the date metadata fields e.g. Date Last Modified or Publication date). Common metadata values can also be identified and tallied e.g. keyword/subject, content owner / originator and type of resource e.g. HTML, PDF, Word, Excel formats.

In a further embodiment of the invention, a measure of how successful a data-retrieval system is at delivering the best (i.e. most appropriate) content to users is provided. For any given subject area, it is possible for owners of content on the data-retrieval system to determine which are the best resources to be returned for a given query. This is an exercise akin to that carried out when determining "Best Bets" for a given Search query (where specific resources are artificially forced to the top of a Search results page, in response to the user typing in a relevant word or phrase). In one embodiment of the present invention, selection of the best bets from a Search result set may be based on the RUA closeness of match score.

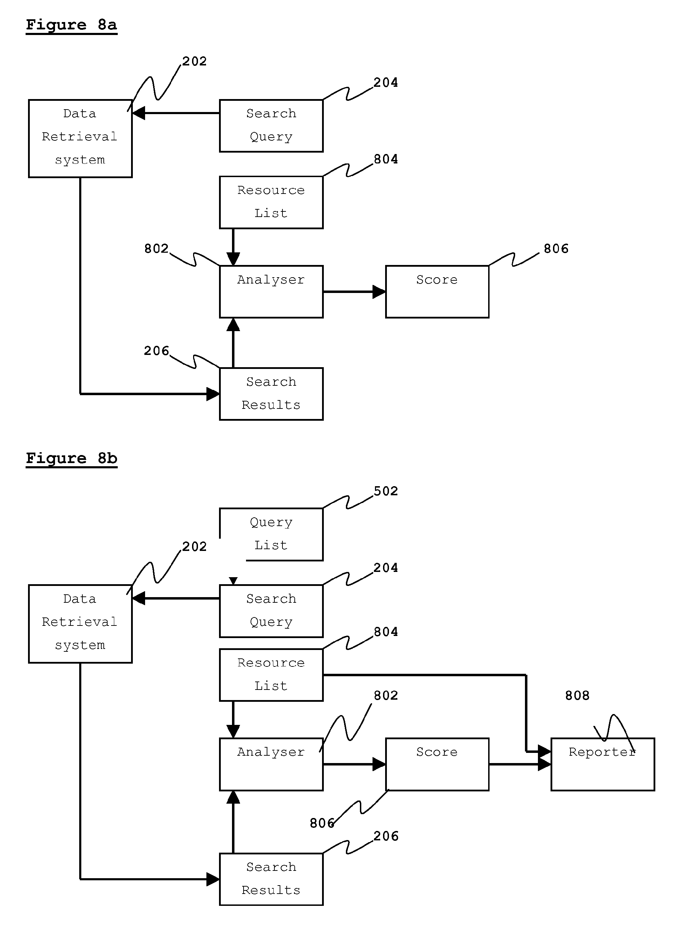

Referring now to Fig. 8a, which schematically shows this embodiment of the invention, an Analyser **802** compares records/results in the Search results **206** with a Resource List **804** of the best resources available from data-retrieval system **202** and determines a Score **806** representative of how close a known resource in the Resource List 804 is to the top of the search results page. Typically, the data source accessed by the data-retrieval system 202 is a source utilized by the owner of the content, and may be a single source, such as a commercial database or private in-house information resource, or it may be a single website, for example a newspaper website, a government website or a retailer's website, or it may be a collection of websites, or a portal.

The Result Position Analysis (RPA) measures how successful a search engine is at delivering the best content to users. For instance:

- an RPA Score of 100% means that the page is the first result

- an RPA Score of 0% means that the page is not found on the result page, within the specified number of results.

It is likely that there could be more than one high quality page for a given search. If this is the case and there are x number of high quality pages, then an RPA Score of 100% for a specific search would mean that the best x pages are in positions 1 to x in a search results page.

Measuring the RPA Score first requires:

• identifying the most popular searches (as for the Result Utility Analysis, this is achieved using the search engine log)

• identifying the unique identifiers (usually URL addresses) of the best resources for these searches - these can either be user defined or automatically determined using the RUA score.

Once this information is determined, it is possible to assess the results of searches and calculate an overall score.

For example, a lower RPA score is given when a page is not in first position on the results page, but is within the first, say, 10 results. It is possible to calculate a gradually reducing RPA score if the result position of a target page is in position 3,4,5 etc. on the results page. If the target is not found anywhere within the first n results, then the score is effectively zero. The term 'RPA Score @ n' means that the first n results have been examined to see if a page has been found. Thus a score of 0% means that the URL is not found within n results; if it is in the nth position then that is better than not being found at all, and so the score is greater than 0%.

In one embodiment, the number n is user definable, along with a value for a "shelf" setting, which is also user definable. For example, the shelf may be set for the nth result as being 30%, which means that if the result is in the nth position the score is 30%, but if it is in the (n+1) position its score is 0%.

The RPA scores for positions within the result set can be adjusted over a range of values, depending on the value of n. Where n is 10, RPA scores can be allocated as shown in Table 1.

### Table 1 - Typical RPA Scores

| Position in Search Results | RPA Score (%) |
| --- | --- |
| 1 | 100 |
| 2 | 92 |
| 3 | 84 |
| 4 | 76 |
| 5 | 68 |
| 6 | 60 |
| 7 | 52 |
| 8 | 44 |
| 9 | 36 |
| 10 | 30 |
| 11 | 0 |
| 12 | 0 |

The closeness of match score between the search query and the search result (RUA score) can be used to identify "Best bet" resources, and the RPA analysis applied to the Search result data obtained from a closeness of match analysis. For example, data from the "housing" search in Fig. 6 is summarised in Table 2.

### Table 2 - RPA of data in Fig. 6

| Position in Search Results | Closeness of Match (RUA) score (%) | "Best Bet"? (Y/N) | RPA Score (%) |
| --- | --- | --- | --- |
| 1 | 0 | N | - |
| 2 | 90 | Y | 92 |

(continued)

| Position in Search Results | Closeness of Match (RUA) score (%) | "Best Bet"? (Y/N) | RPA Score (%) |
|---|---|---|---|
| 3 | 90 | Y | 84 |
| 4 | 95 | Y | 76 |
| 5 | 87 | Y | 68 |
| 6 | 93 | Y | 60 |
| 7 | 30 | N | - |
| 8 | 0 | N | - |
| 9 | 63 | N | - |
| 10 | 93 | Y | 30 |

In the first column is the position of the search result in the search results set, and the second column has the corresponding closeness of match score. Search results having a score of 87% or greater are selected as "Best Bets" and subjected to Result Position Analysis (this threshold can be adjusted to fine tune the analysis). The RPA score is given in the fourth column. It can be seen that search result 10, which has a closeness of match score of 93% only has an RPA score of 30%, which indicates that the content of the document corresponding to search result 10 should be modified so that it appears higher in the result set. In other words, when identifying a search result with a high correlation/ closeness of match score, but low RPA score, it is desirable to amend the title, summary or metadata associated with search result 10 to ensure that the search result appears higher in the result set. Alternatively, it may be desirable to force the result to appear higher up in the result set, using techniques such as "Best Bet" positioning.

Referring now to Fig. 8b, which shows a further embodiment of the invention, in which the data source is a source under the management of a content owner and the Search query is provided from a Query List **502** (data-retrieval system not shown). The Analyser **802** compares results in the Search results **206** with a Resource List **804** of the best resources available from data-retrieval system **202** and determines a Score **806** representative of how close a resource in the Resource List is to the top of the search results page. Reporter **808** reports how effectively the data-retrieval system is providing the best information. For example, the Query List comprises the most popular search queries that users have employed to find information, which can be identified from the data-retrieval system's search engine logs.

It is therefore possible to determine an objective, relevant and highly accurate measure of search performance using the Result Position Analysis (RPA). Agreeing the list of search terms and pages is relatively easy to do - by viewing the search logs and then contacting content owners to identify the likely pages they would expect to be found for the most common searches. However, measuring an RPA score is time consuming to achieve manually because the URL itself is usually hidden from the user on the result page, requiring the user to click on the link to check the value.

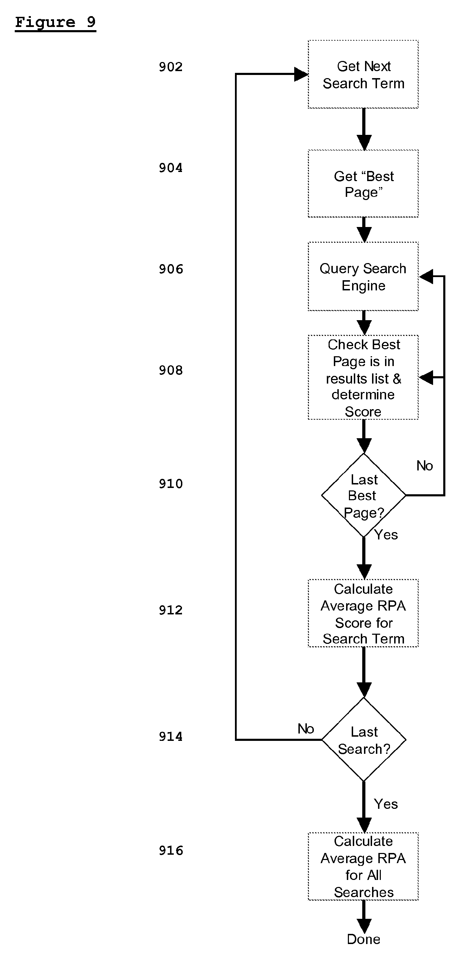

Referring now to Fig. 9 which shows a flow chart of the method steps for calculating an RPA score. A search Query 204 is retrieved, at step **902,** from the Query List **502** (not shown). A best page is obtained, at step **904,** from the Resource List **804** (not shown). The search Query 204 is used, at step **906,** to query the Search engine and the presence of the best page in the Search results is checked and a RPA (Results Position Analysis) Score is determined, at step **908.** A determination is made, at step **910,** as to whether or not the end of the Resource List has been reached. If it has, then an average Score for the Search term is calculated at step **912;** if not, then steps **906** and **908** are repeated. A determination is made, at step **914,** as to whether or not the end of the Query List has been reached. If it has, then an average Score for all the Search term is calculated at step 916; if not, then steps 902 to 912 are repeated.

In a further embodiment, the closeness of match analysis RUA and/or RPA scoring is done in groups/batches, in what is referred to as a batch mode. In this way, the analysis is performed against a plurality of sites containing similar content (e.g. a group of local authority sites) using the same list of search terms and / or resources. This means that a number of sites can be compared in terms of their RUA score. This also allows the same RPA analysis to be performed using a plurality of different search engines on the same content (i.e. an internal search engine versus external search engine). In both cases, the data retrieval system operating in batch mode saves the results in a memory store and generates average scores for all values on the site. In addition, the output from the program may be stored and therefore referred back to, further analysed or merged to generate new result pages. Data may be conveniently stored in an open XML based format.

Further parameters may be added to the average RPA or RUA scores that allow calculations of tangible benefits in terms of:

- Time savings to users through:

  accessing a page more efficiently because the descriptors of the page are clearer,

  avoiding clicking on less relevant content, and

  accessing the page more efficiently because the reference is higher up the result list.

- Cost savings through:

  - increasing the proportion of queries answered by search engine / content rather than other approaches (e.g. phone call, email) by enabling the best content to be delivered to the top of the results page.

In a further embodiment, the measure of how successful a data retrieval system is at delivering the best content (Fig. 8a) and the measure of closeness of match between a Search query and the Search results (Fig. 4a) are combined.

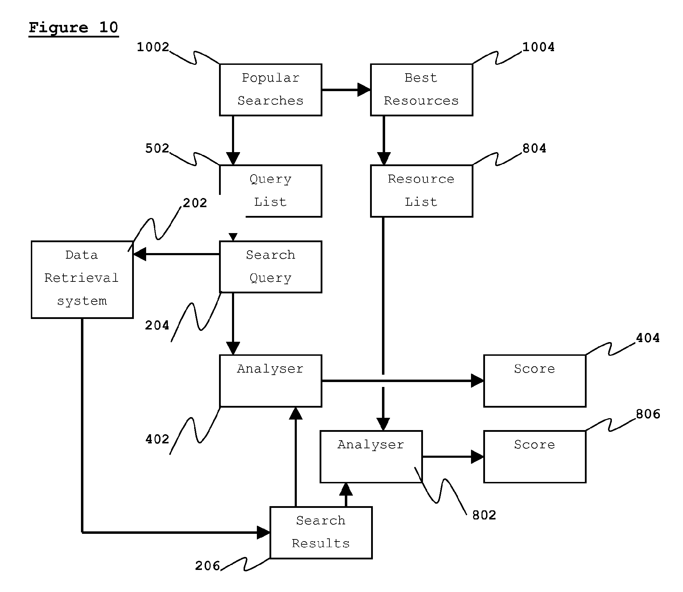

Referring now to Fig. 10, the most popular searches **1002** are identified and formed into a Query List **502**. The best resources are identified automatically by selecting the results with the highest RUA score, for example those with RUA scores above a pre-defined threshold value. This selection may also be weighted based on the popularity of pages on the site. The best resource or resources **1004** for each of the most popular searches may be identified from the automatically selected resources or through the experience and knowledge of content owners, or a combination of both techniques. The best resource or resources **1004** are formed into a Resource List **804**.

Each Search query **204** in the Query List is used to interrogate the data-retrieval system **202** and a set of Search results **206** is produced for each Search query. The Analyser **402** assesses the closeness of match between each Search query and every corresponding Search result to calculate a Score **404**. The Analyser **802** determines the position in the Search results of each of the resources identified as most appropriate to the Search query to give a Score **806**.

One benefit in measuring the effectiveness of search (using measures such as RUA and RPA) is that it enables action to be taken in response to an analysis. While technical adjustments may usually be made to the search engine operation to produce better results, the search engine's results are ultimately dependent on the content that it is able to provide access to.

RUA and RPA may be used to help ensure that the content appearing on a web site is as effective as possible. For instance, ensuring that:

- clearly written content, including synonyms and abbreviations, is present in the body of pages;

- each page has a unique title and summary - so that it is clearly distinguished from similar content that may appear alongside it on the results page;

- appropriate metadata (such as keywords or subject) is used to provide further weighting of search results

- the search engine is tuned to deliver the best results for the available content.

It is desirable to develop and implement a way of working (e.g. processes, roles and responsibilities, standards) that includes tasks to assess search effectiveness and ensure that content management processes take account of search based assessments.

At a high level, the content process is as follows:

  Stage 1 - the business identifies requirements for new content;

  Stage 2 - content is created and approved;

  Stage 3 - content is published.

  Stage 4 - once it has been published to a live site and sits alongside other content, then it is possible to evaluate how effective the search engine is at returning this new content.

If necessary, the content, title and summary of the content, and possibly its metadata, may be updated if pages are not appearing high enough in the search results for the relevant search terms.

In most organisations, the ownership of content for a web site and the responsibilities of owners are poorly defined. Clearly, an additional responsibility for the content owners is to ensure that their content is appropriately delivered through search. It is desirable to build in search effectiveness as a regular measurement within "business as usual" processes. One way that this may be achieved is by providing effective tools to simplify and automate the process of measurement of search effectiveness. Currently, content owners have limited motivation to improve the content for search because they have few, if any, tools to measure how well a given search engine is delivering their content, and therefore they have no method of assessing improvements through changes to content.

An automated tool may be used to provide evidence of poor quality search results and provide the motivation for content owners to improve the quality of content. Through benchmarking with other similar sites or against other areas of the same site, an effective comparison of content quality may be achieved using RUA and RPA measures. It is possible to quickly highlight poor areas of content retrieval and provide the evidence to make changes.

It is desirable that measuring search effectiveness should not be a one off exercise. Most web sites or significant document collections have a regular stream of changes - new content added, old content being removed, content being updated. Therefore, the best page for a given search may be moved down the results list/page by new, less appropriate content at any time. This is particularly likely if the search engine attaches a higher weighting to more recently updated content. As a result, RUA and RPA Scores can change almost daily for large, complex sites where there is a relatively high turnover of content.

Therefore, there are clear benefits to providing a solution that is able to automate the measurement of search effectiveness to:

a) enable measurement to be carried out on a regular (e.g. daily or weekly basis),

b) minimise the manual effort required in the measurement process,

c) where possible, remove the subjectivity associated with manual assessment, and therefore be used to compare different search engines or search engine tuning options, and

d) cover the wide range of search terms that are used by users.

## Claims

1. A method of analysing search results in a data retrieval system comprising:

   receiving a search query for use in a search engine;
   receiving one or more search results obtained from execution of the search query in the data retrieval system, each of the one or more search results comprising attribute information relating to the search result; and assessing, on the basis of the attribute information, a correlation between the search query and the one or more search results.

2. The method according to Claim 1, wherein the attribute information comprises a title element for each of the one or more search results, and the assessing step comprises calculating the correlation between the search query and the title element.

3. The method according to Claim 1 or Claim 2, wherein the attribute information for each of the one or more search results comprises an abstract of the substantive content of each of the results, and the assessing step comprises calculating the correlation between the search query and the abstract.

4. The method according to any preceding claim, wherein the attribute information comprises metadata for each of the one or more search results, and the assessing step comprises calculating the correlation between the search query and the abstract.

5. The method of any preceding claim, wherein the assessing step comprises calculating a closeness of match score for each of the one or more search results, on the basis of one or more correlation calculations between the search query and the attribute information, and further comprising a sorter arranged to order the search results according to the closeness of match score.

6. A method of analysing search results in a data retrieval system comprising:

receiving one or more resource indicators each corresponding to one or more resources available through the data-retrieval system;

further receiving an ordered list of search result items, from a search engine executing a search query, wherein the search result items are associated with a particular resource indicator; and

determining the positioning of the received resource indicators within the ordered list of search result items; wherein the positioning of the received resource indicators provides a measure of the effectiveness of retrieval of the received resource indicators from the data retrieval system by use of the search query.

7.  The method of claim 6, wherein the received one or more resource indicators corresponds to a user selection of resource indicators of interest.

8.  The method of claim 6, further comprising determining closeness of match scores for one or more resources on the basis of one or more correlation calculations between the search query and attribute information relating to the search results, wherein the received one or more resource indicators are selected on the basis of the determined closeness of match scores for the one or more resources.

9.  The method of any of claims 6 to 8, wherein the data-retrieval system is an Internet Search engine and wherein the data-retrieval system is selected from the group comprising: a single website, a portal, a complex intranet site, and a plurality of websites.

10. The method of any of claims 6 to 9, a high closeness of match score identifies potential best resources for the search query.

11. The method of any of claims 6 to 10, wherein one or more search queries are provided from a query list.

12. The method of any of claims 6 to 12, in which said query list contains popular search queries made to the data-retrieval system.

13. The method of any of claims 6 to 12, further comprising:

receiving the one or more search queries;
further receiving a list of search results for each of the one or more search queries;
calculating a closeness of match score corresponding to the correlation between each result within the list of search results and corresponding search query; and
reporting an assessment of the correlation between the list of search results and the corresponding search query.

14. An analyser for analysing search results in a data retrieval system comprising:

a search query receiver for receiving a search query for use in a search engine, the search engine execution of the query being in the data retrieval system;
a search results receiver for receiving one or more search results of the search engine executing the search query, each of the one or more search results comprising attribute information relating to the search result;
wherein the analyser being arranged to assess, on the basis of the attribute information, the correlation between the search query and the one or more search results.

15. An analyser for analysing search results in a data retrieval system comprising:

a resource indicator receiver for receiving one or more resource indicators each corresponding to one or more resources available through the data-retrieval system;
a search result receiver for receiving an ordered list of search result items, from a search engine executing a search query, wherein the search result items are associated with a particular resource indicator; and
wherein the analyser is arranged to determine the positioning of the received resource indicators within the ordered list of search result items; wherein the positioning of the received resource indicators provides a measure of the effectiveness of retrieval of the received resource indicators from the data retrieval system by use of the search query.

## Figure 1

## Figure 2

Figure 3

EP 2 228 737 A2

# Search Results

➤ **Planning and Conservation Home Page**

Notice: Submitting a planning application from 25 February 2008 the council will be fully ...

➤ **Planning and Conservation Home Page**

Notice: Submitting a planning application from 25 February 2008 the council will be fully ...

➤ **Planning and Conservation Home Page**

Notice: Submitting a planning application from 25 February 2008 the council will be fully ...

▧ **Microsoft Word – ALL Title and index**

➤ **Revenue Budget 2008-2009 Planning and Borough Development**

Revenue Budget 2008-2009

## Figure 4a

## Figure 4b

Figure 5a

Figure 5b

Figure 6

**Figure 7**

702 — Get Next Search Term

704 — Query Search Engine

706 — Get Result "Title & Summary"

708 — Determine TASA Score for result

710 — Last Result?

No

Yes

712 — Calculate Average for Search Term

714 — Last Search?

No

Yes

716 — Calculate Average for All Searches

Done

## Figure 8a

## Figure 8b

## Figure 9

902 — Get Next Search Term

904 — Get "Best Page"

906 — Query Search Engine

908 — Check Best Page is in results list & determine Score

910 — Last Best Page? — No

Yes

912 — Calculate Average RPA Score for Search Term

914 — Last Search? — No

Yes

916 — Calculate Average RPA for All Searches

Done

## Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6012053 A
- US 20060136411 A
- US 7386543 B